# EUROPEAN PATENT APPLICATION

(11) **EP 4 570 600 A1**
(43) Date of publication of application: **18.06.2025**
(21) Application number: 23865327.3
(22) Date of filing: 01.09.2023
(51) Int. Cl.: B60R 21/231, B60R 21/203, B60R 21/205, B60R 21/207

(54) **AIRBAG SYSTEM**

(30) Priority: 12.09.2022 JP 2022144264
(71) Applicant: Autoliv Development AB, 44783 Vargarda (SE)
(72) Inventor: TOCHIGI Tomofumi, Yokohama-shi, Kanagawa 222-8580 (JP); KOBAYASHI Yuto, Yokohama-shi, Kanagawa 222-8580 (JP); SAKURAI Tsutomu, Yokohama-shi, Kanagawa 222-8580 (JP)
(74) Representative: Müller Verweyen
(86) International application number: PCT/JP2023/032069
(87) International publication number: WO 2024/057972

(57) **Abstract**

To provide an air bag system in which a cushion of a side air bag does not swing or move and does not incline when an occupant is restrained. Provided is an air bag system 10 including: a side air bag 20 which is located on a side portion on the center side, in the vehicle's width direction, of a driver's seat 2a of a vehicle and which is inflated and deployed toward a front side of the vehicle; a front air bag 30 for a front passenger's seat of the vehicle which is inflated and deployed on the vehicle's front side of the front passenger's seat; and a control device 40 that, in a side collision, controls inflation and deployment of the front air bag 30 for the front passenger's seat together with the side air bag 20. When the side airbag 21 inflated and deployed and the front airbag 30 for the front passenger's seat inflated and deployed are viewed from a lateral direction that is perpendicular to the front-rear direction of the vehicle, a front-side end portion 25 of the side airbag 20 is positioned further toward the front side of the vehicle than the vehicle's rear-side end portion 35 of the front airbag 30 for the front passenger's seat.

## Description

### [TECHNICAL FIELD]

The present invention relates to an airbag system including a plurality of airbag devices and a control device for inflating and deploying cushions of their respective airbag devices.

### [BACKGROUND ART]

In a vehicle in which a plurality of vehicle seats are arranged in a vehicle width direction, a far-side airbag may be mounted on a side portion on the center side, in the vehicle width direction, of a backrest portion of each vehicle seat.

For example, an occurrence of a side collision in which a structure such as another vehicle or a utility pole collides with a side door on the front passenger's seat side causes an inertial force at an initial stage of the collision to move an occupant seated in the driver's seat toward the front passenger's seat side. The far-side airbag is configured to restrain, when a side collision occurs, an occupant seated in a seat on the opposite side to the collision side from moving toward the collision side.

In the far-side airbag of Patent Document 1, a cushion and an inflator are accommodated inside a side portion of the backrest portion. When an impact from a lateral side of the vehicle is detected, inflation gas is supplied from the inflator to the cushion, which starts inflating and deploying the cushion. Thereafter, the cushion pops out forward from the position of the side portion of the backrest portion with a part of the cushion still being left in the backrest portion, thereby completing the inflation and deployment of the cushion between the vehicle seats. Accordingly, the inflated and deployed cushion restrains the occupant seated on the driver's seat from moving toward the front passenger's seat side.

On the other hand, a front airbag for the front passenger's seat is known as an airbag device that exhibits restraint performance corresponding to a collision from the front side of a vehicle.

A front airbag for the front passenger's seat described in Patent Document 2 is accommodated in an instrument panel. When an impact from the front side of the vehicle is detected, inflation gas is supplied from the inflator to the cushion, which starts inflating and deploying the cushion. Thereafter, a fragile slit formed in the instrument panel lets the cushion pop out toward the rear side of the vehicle, thereby completing the inflation and deployment of the cushion. Hence, the cushion inflated and deployed as such restrains the occupant seated on the front passenger's seat from moving toward the front side of the vehicle.

### [RELATED ART DOCUMENTS]

### [PATENT DOCUMENTS]

Patent Document 1: Japanese Unexamined Patent Application Publication No. 2015-110373
Patent Document 2: Japanese Unexamined Patent Application Publication No. H7-69149

### [SUMMARY OF THE INVENTION]

### [PROBLEM TO BE SOLVED BY THE INVENTION]

In the cushion of the far-side airbag described above, the base portion thereof is fixed to the vehicle's seat side. Introduction of an inflation gas into the cushion from the inflator at the time of a side collision inflates and deploys the cushion from the vehicle's seat toward the front side in the vehicle's front-rear direction, and thus the cushion restrains an occupant seated on the vehicle seat.

At this moment, the base portion of the cushion is fixed to the vehicle's seat side, whereas the leading end portion of the cushion that the inflation and deployment of the cushion thrust out toward the front side in the vehicle front-rear direction is in a free state. In that state the leading end portion swings to the left and right in the vehicle width direction. Therefore, in the cushion that has completed its inflation and deployment, around the base portion, which may be referred to as "one end," the leading end portion, which may be referred to as "the other end," is likely to rotate to the left and right in the horizontal direction.

A near-side airbag, however, is inflated and deployed so as to face a vehicle body member such as a door. The vehicle body member serves as a wall, and the movement of the cushion is easily restricted by the wall. On the other hand, the far-side airbag is inflated and deployed at the center, in the vehicle width direction, of the vehicle cabin. It is, therefore, difficult to suppress the rotation and the inclination of the cushion.

When the vehicle's front side of the cushion of the far-side airbag rotates, the cushion swings so as to avoid the occupant moving in the vehicle width direction, which makes it difficult to sufficiently and appropriately protect the occupant. In addition, when the upper side of the cushion of the far-side airbag is inclined toward the front passenger's seat side, it is not possible to secure a portion that accurately receives the occupant, which makes it difficult to sufficiently and appropriately protect the occupant.

The present invention is made in view of such circumstances, and an object of the present invention is to provide an airbag system in which when a cushion of a far-side airbag is inflated and deployed, the vehicle's front side of the cushion is prevented from rotating toward a front passenger's seat and an upper side of the cushion is prevented from tilting toward the front passenger's seat, so that the cushion does not swing or tilt when an occupant is restrained.

### [MEANS FOR SOLVING THE PROBLEM]

The inventors of the present application considered that an improvement of an airbag system was necessary in order to solve the above-described problem. The inventors of the present application have conducted intensive studies to coordinate a front airbag with a far-side airbag in order to improve the occupant restraining performance, because the front airbag has conventionally been intended only to protect an occupant from a frontal collision and does not contribute to protection of the occupant at the time of a side collision. As a result of such intensive studies, the inventors have made the present invention. Hereinafter, the term "side airbag" is used, but the term "side airbag" in this Specification has the same meaning as the term "far-side airbag."

The present invention is an airbag system including: a side airbag which is located on a side portion on the center side, in a vehicle's width direction, of one seat of a vehicle and which is inflated and deployed toward a front side of the vehicle; a front airbag that is inflated and deployed at a vehicle's front side of the other seat that is provided adjacent to the one seat of the vehicle in a vehicle width direction; and a control device that, in a side collision, causes the front airbag to be inflated and deployed together with the side air bag. In the present invention, when the side airbag inflated and deployed and the front airbag inflated and deployed are viewed from a lateral direction that is perpendicular to a front-rear direction of the vehicle, a vehicle's front-side end portion of the side airbag is positioned further toward the front side of the vehicle than a vehicle's rear-side end portion of the front airbag.

The present invention may be configured to include: a side airbag which is located on a side portion on the center side, in the vehicle's width direction and is inflated and deployed toward a vehicle's front side of one seat of a vehicle; a front airbag that is inflated and deployed at the vehicle front side of the one seat of the vehicle; and a control device that, in a side collision of the vehicle, causes the front airbag to be inflated and deployed together with the side airbag. In this case as well, when the side airbag inflated and deployed and the front airbag inflated and deployed are viewed from a lateral direction that is perpendicular to a front-rear direction of the vehicle, a vehicle's front-side end portion of the side airbag is positioned further toward the front side of the vehicle than a vehicle's rear-side end portion of the front airbag.

The present invention may have a configuration having an overlapping portion at which the side airbag and the front airbag overlap each other when the side airbag inflated and deployed and the front airbag inflated and deployed are perspectively viewed from a lateral direction that is perpendicular to the front-rear direction of the vehicle.

The present invention may have a configuration where, in an inflation completed state in which the side airbag and the front airbag are completely inflated and deployed respectively, the side airbag has a first contact region that is in contact with the front airbag, and the front airbag has a second contact region that is in contact with the side airbag.

The present invention may have a configuration where the side airbag includes: a first main chamber that is inflated and deployed toward a vehicle's front side; and a first sub-chamber that is inflated and deployed so as to protrude from the first main chamber toward a center side in a vehicle's width direction, and where the first sub-chamber is provided in the overlapping portion.

The present invention may have a configuration where the front airbag includes: a second main chamber that is inflated and deployed toward a vehicle's rear side; and a second sub-chamber that is inflated and deployed so as to protrude from the second main chamber toward a center side in a vehicle's width direction, and where the second sub-chamber is provided in the overlapping portion.

The present invention may have a configuration where the side airbag is provided with a first high-friction portion having a larger friction coefficient than a surface portion of a base fabric panel constituting the side airbag, and where the first high-friction portion includes the first contact region.

The present invention may have a configuration where the front airbag is provided with a second high-friction portion having a larger friction coefficient than a surface portion of a base fabric panel constituting the front airbag, and where the second high-friction portion includes the second contact region.

In the present invention, the front airbag may be a front airbag for a front passenger's seat.

In the present invention, the front airbag may be a driver's front airbag.

### [EFFECT OF THE INVENTION]

An airbag system of the present invention includes: a side airbag which is located on a side portion on the center side, in a vehicle's width direction, of one seat of a vehicle and which is inflated and deployed toward a front side of the vehicle; a front airbag that is inflated and deployed at a vehicle's front side of the other seat that is provided adjacent to the one seat of the vehicle in a vehicle width direction; and a control device that, in a side collision, causes the front airbag to be inflated and deployed together with the side air bag. In the present invention, when the side airbag inflated and deployed and the front airbag inflated and deployed are viewed from a lateral direction that is perpendicular to a front-rear direction of the vehicle, a vehicle's front-side end portion of the side airbag is positioned further toward the front side of the vehicle than a vehicle's rear-side end portion of the front airbag. Thus, while the front airbag has conventionally been inflated and deployed only at the time of a head-on collision, the front airbag of the present invention can be inflated and deployed also at the time of a side collision, and the inflated and deployed front airbag can be brought into contact with the side airbag.

In the present invention, for example, when the cushion of the side airbag on the driver's seat side is inflated and deployed, the front airbag on the front passenger's seat side serving as a support can suppress the vehicle front side of the cushion from rotating toward the front passenger's seat and can also suppress the upper side of the cushion from tilting toward the front passenger's seat.

According to the present invention, since the cushion does not swing or tilt when the occupant is restrained, the occupant-restraining performance is enhanced. Further, according to the present invention, since it is not necessary for the side airbag to be the sole provider of the occupant-restraining force, the structure of the side airbag can be simplified.

### [BRIEF DESCRIPTION OF THE DRAWINGS]

[FIG. 1A] FIG. 1A is a diagram viewed from above in the vehicle illustrating the airbag system according to an embodiment with a cushion of a side airbag and a cushion of a front airbag for a front passenger's seat completely inflated and deployed respectively.
[FIG. 1B] FIG. 1B is a diagram similar to FIG. 1A illustrating a variation with a front airbag for a driver deployed.
[FIG. 2] FIG. 2 is a diagram viewed from the side of the vehicle illustrating the airbag system according to the embodiment with the cushion of the side airbag and the cushion of the front airbag for a front passenger's seat completely inflated and deployed respectively.
[FIG. 3A] FIG. 3A is a diagram viewed from above in the vehicle illustrating the airbag system according to a first variation of the embodiment with a cushion of a side airbag and a cushion of a front airbag for a front passenger's seat completely inflated and deployed respectively.
[FIG. 3B] FIG. 3B is a view similar to FIG. 3A illustrating a second variation in which the second sub-chamber is provided in the front airbag for the front passenger's seat.
[FIG. 4] FIG. 4 is a diagram describing a movement of an occupant at the time of a side collision according to an embodiment including neither a first sub-chamber nor a second sub-chamber.
[FIG. 5] FIGS. 5A and 5B are diagrams viewed from above in the vehicle illustrating the airbag system according to a third variation of the embodiment with a cushion of a side airbag and a cushion of a front airbag for a front passenger's seat completely inflated and deployed respectively.
[FIG. 6] FIGS. 6A and 6B are diagrams viewed from above in the vehicle illustrating the airbag system according to a fourth variation of the embodiment with a cushion of a side airbag and a cushion of a front airbag for a front passenger's seat completely inflated and deployed respectively.
[FIG. 7] FIGS. 7A and 7B are views similar to FIG. 5 illustrating a variation combining the second variation and the third variation.

### [DESCRIPTION OF THE PREFERRED EMBODIMENTS]

Embodiments of the present invention are described below in detail with reference to the drawings. Note that the following embodiments are examples of the present invention, and are not intended to limit the scope of the present invention, the application thereof, or the uses thereof.

An example of the definition of the term "occupant" in the present invention is an occupant in accordance with a frontal collision test dummy (Hybrid III AM50; human body dummy for frontal collision test set forth in specification [49CFR Part 572 Subpart E and O] of NHTSA [National Highway Traffic Safety Administration]) with a physique equivalent to the average male in the United States; having an approximate size of 175 cm height, 88 cm sitting height, and 78 kg weight. However, the present invention can also be applied for other anthropomorphic test dummies.

Note that in the present specification, the terms "upper" and "upper side" refer to a head direction of an occupant 3 seated in a regular position in a seat, and "lower" and "lower side" refer to a foot direction of the occupant 3. It should be noted that the "regular position" refers to a position in a center, in the left-right direction, of a seat cushion of the seat with the back of the occupant 3 in contact with a backrest portion 7 from above and below. In addition, the terms "front" and "front side" refer to a forward direction of the occupant 3 seated in a seat in the regular position, and "rear" and "rear side" refer to a backward direction of the occupant 3. Moreover, the terms "left" and "left side" refer to a left-hand direction of the occupant 3 seated in a seat in the regular position, and "right" and "right side" refer to the right-hand direction of the occupant 3. Furthermore, the "width direction(s)" of the vehicle and the "vehicle width direction(s)" may stand for the same direction(s) as the "right" and "left" direction(s).

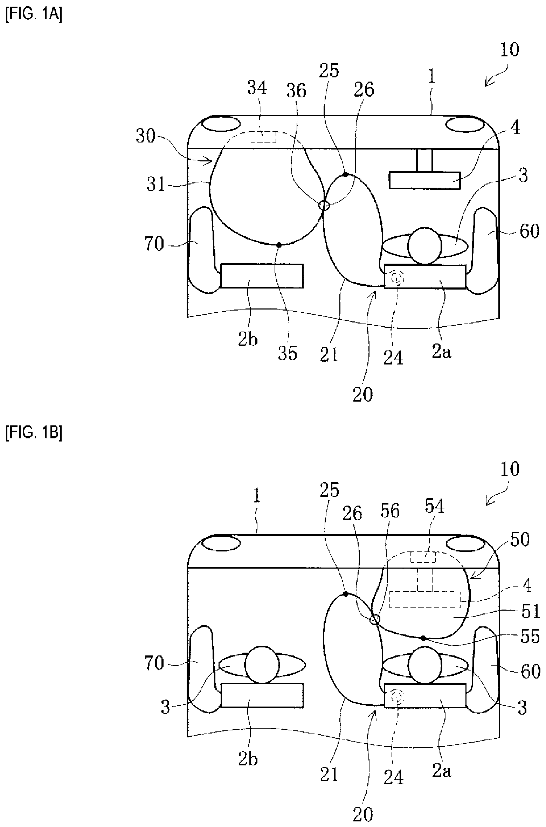

As illustrated in FIG. 1A, the present embodiment is an airbag system 10 that includes: at least a side airbag 20 and a front airbag 30 for a front passenger's seat; and a control device 40 for controlling, among other things, the timing of starting the inflation and deployment of cushions 21, 31 of their respective airbag devices. The airbag system 10 of the present embodiment further includes: a driver's seat side airbag 60, which protects the near side of the occupant 3 seated in the driver's seat 2a; and a front passenger's seat side airbag 70, which protects the near side of the occupant seated in the front passenger's seat 2b. A steering wheel 4 is provided in front of the driver's seat 2a. Of the two seats arranged side by side in the vehicle width direction in the vehicle 1, the driver's seat 2a, specifically the backrest portion 3 thereof accommodates the side airbag 20 in a side portion on the far side thereof. The front airbag 30 for the front passenger's seat is accommodated in an instrument panel 5 of the vehicle 1. Of those seats arranged in the vehicle width direction, the driver's seat 2a corresponds to one seat in the vehicle and the front passenger's seat 2b corresponds to the other seat, which is provided adjacent to the driver's seat 2a. The front passenger's seat front airbag 30 corresponds to a front airbag. Before describing the airbag system 10, the configuration of the seat will be described below.

### [Schematic Configuration of Seat]

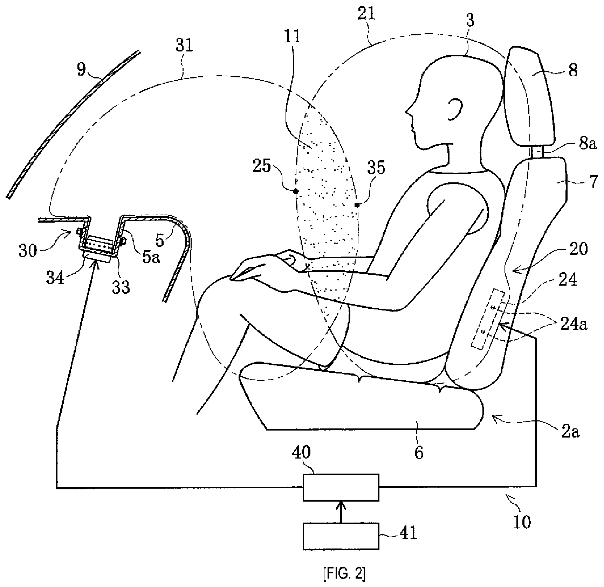

As illustrated in FIG. 2, the driver's seat 2a includes a seat cushion 6 and a backrest portion 7. The upper end portion of the backrest portion 7 has a headrest 8 attached via rod-shaped support members 8a. The headrest 8 may be formed integrally with the backrest portion 7 without providing the support members 8a.

The seat cushion 6 has a pad provided on the upper side of a seat pan, and the pad is covered with a cover material. In the backrest portion 7, a pad is provided on the front side of the seat frame, and the pad is covered with a cover material.

The cushion 21 of the side airbag 20 placed in a flat state is rolled up or folded into a bellows shape to convert it to an accommodation form that is adapted to be accommodated in the driver's seat 2a. The cushion 21 in the accommodated state is accommodated along a side portion of the seat frame of the driver's seat 2a. The location where the cushion 21 is accommodated is the inside of a side support portion provided in the far-side side portion of the backrest portion 3.

### [Configuration of Side Airbag]

The side airbag 20 is an airbag device for protecting the far-side side portion of the occupant 3 seated on the driver's seat 2a. The side airbag 20 includes a cushion 21 and an inflator 24. At the time of a side collision of the vehicle, the side airbag 20 is inflated and deployed toward the front side of the vehicle at a side portion of the driver's seat 2a located on the center side in the vehicle width direction.

The inflator 24 is a device for injecting gas into the cushion 21 for inflation. In the side airbag 20, a tubular inflator 24 is disposed in the cushion 21 and injects gas into the cushion 21 through a hole 24a formed in the outer side surface of the inflator 24. The inflator 24 is disposed in an accommodation portion provided in the cushion 21.

The cushion 21 has a required length in the up-down direction and the front-rear direction, which make it possible to restrain a side of the occupant 3, for example, a side of: a head portion, a shoulder portion, an upper arm portion, a chest portion, a waist portion, or an abdomen portion. The cushion 21 is formed in a bag shape by sewing together the outer periphery portions of 2 pierces of base fabric panels formed in identical shapes so as to increase thickness in the left-right directions. Alternatively, a required number of base fabric panels each having a required shape may be prepared in advance, and a bag body may be formed by sewing at predetermined positions.

Two stud bolts (not illustrated) are attached to the outer side surface located on the side opposite the hole 24a of the inflator 24. The two stud bolts protrude, at appropriate spacing in the longitudinal direction, from that outer side surface of the inflator 24. Using these stud bolts, the inflator 24 is secured to the seat frame. In addition, fixing the accommodation portion of the inflator to the seat frame also fixes the cushion 21 to the seat frame. A fastener may be used as a means for attaching the cushion 21 to the side frame.

### [Configuration of Front Airbag for Front Passenger's Seat]

The front airbag 30 for the front passenger's seat includes: a cushion 31 that is inflated and deployed toward the seat 2b for the front passenger's seat; an inflater 34 that injects inflation gas for inflating the cushion 31; and an accommodation case 33 which accommodates the cushion 31 and which is attached to an accommodation portion 5a.

As illustrated in FIG. 2, the front airbag 30 for a front passenger's seat is disposed in the accommodation portion 5a provided in a front passenger's seat panel of the instrument panel 5. The front passenger's seat panel is a panel disposed in front of the front passenger's seat. The airbag cushion 31 is folded or rolled into a small, folded accommodation form for placement in the accommodation portion 5a.

A disk-shaped inflator 34 is disposed in the cushion 31. The inflator 34 is a gas generator, and is actuated by a signal received from a control device 40 connected to a sensor 41 for detecting a collision. Once actuated, the inflator 34 supplies inflation gas to the cushion 31.

In a non-inflated state before the cushion 31 is inflated and deployed, the opening of the accommodation portion 5a is closed by a door portion provided in the instrument panel 5. The front window screen 9 is a plate member provided on a front window of the vehicle, and is provided so as to be inclined toward the vehicle interior with respect to the upper surface of the instrument panel 5.

In the conventional airbag system, the front airbag 30 for the front passenger's seat is configured such that the inflator 34 injects the inflation gas into the cushion 31 only when an impact is applied from the front side of the vehicle. The inflated and deployed cushion 31 is used for the purpose of restraining, only from the front side, the occupant 3 seated on the front passenger's seat 2b.

On the other hand, the front airbag 30 for a front passenger's seat in the airbag system 10 of the present embodiment is used for a greatly different purpose. In the following description, the characteristic configuration and effects of the airbag system 10 will be described with reference to FIG. 1A and FIG. 2.

### [Configuration and Effects of the Airbag System of the Present Embodiment]

The airbag system 10 includes: a side airbag 20 which is located on a side portion on the vehicle center side of the driver's seat 2a of the vehicle 1 and which is inflated and deployed toward the front side of the vehicle; a front airbag 30 for the front passenger's seat that is inflated and deployed on the vehicle's front side of the front passenger's seat 2b; and a control device 40 that, in a side collision, causes the front airbag 30 for the front passenger's seat to be inflated and deployed together with the side airbag 20. Thus, although in the related art, the front airbag 30 for a front passenger's seat has been inflated and deployed only at the time of a head-on collision, the airbag system 10 can inflate and deploy the front airbag 30 for a front passenger's seat also at the time of a side collision. As illustrated in FIG. 2, when the cushion 21 of the side airbag 20 inflated and deployed and the cushion 31 of the front airbag 30 for the front passenger's seat inflated and deployed are viewed from a lateral direction of the vehicle 1 that is perpendicular to the front-rear direction, the vehicle's front-side end portion 25 of the cushion 21 of the side airbag 20 is located on a further front side of the vehicle than the vehicle's rear-side end portion 35 of the cushion 31 of the front airbag 30 for the front passenger's seat .

To put it differently, as shown in FIG. 2, the airbag system 10 has an overlapping portion 11 where the cushion 21 of the side airbag 20 inflated and deployed and the cushion 31 of the front airbag 30 for the front passenger's seat inflated and deployed overlap each other when the side airbag 20 and the front airbag 30 for the front passenger's seat are perspectively seen from a lateral-side position with respect to the front-rear direction of the vehicle 1. The overlapping portion 11 is formed between the vehicle's front-side end portion 25 of the side airbag 20 and the vehicle's rear-side end portion 35 of the front airbag 30 for the front passenger's seat.

To be more specific, when the airbag system 10 is in a state in which the side airbag 20 and the front airbag 30 for the front passenger's seat are completely inflated and deployed respectively, as shown in FIG. 1A, the cushion 21 of the side airbag 20 has a first contact region 26 that is in contact with the front airbag 30 for the front passenger's seat, and the cushion 31 of the front airbag 30 for the front passenger's seat has a second contact region 36 that is in contact with the side airbag.

In general, a rotation of the leading end portion of the cushion of the side airbag causes the cushion to swing so as to avoid the occupant moving in the vehicle width direction, which makes it difficult to sufficiently and appropriately protect the occupant. In addition, an inclination of the cushion toward the front passenger's seat side makes it impossible to secure a portion that accurately receives the occupant, which in turn makes it difficult to sufficiently and appropriately protect the occupant.

To deal with such problems as described above, in the airbag system 10, when a side collision, an oblique collision, or the like occurs and the sensor 41 detects the collision, the control unit 40 that receives a signal from the sensor 41 actuates not only the inflator 24 of the side airbag 20 but also the inflator 34 of the front airbag 30 for the front passenger's seat. The inflator 24 ejects gas into the cushion 21 to inflate and deploy the cushion 21, and the inflator 34 ejects gas into the cushion 31 to inflate and deploy the cushion 31.

At this time, in the airbag system 10, the vehicle's front-side end portion 25 of the side airbag 20 is configured to be positioned on the front side, in the front-rear direction of the vehicle 1, of the vehicle's rear-side end portion 35 of the front airbag 30 for the front passenger's seat, and the airbag system 10 has the overlapping portion 11 where the side airbag 20 and the front airbag 30 for the front passenger's seat overlap each other.

In the airbag system 10, the vehicle's front-side end portion 25 of the cushion 21 is positioned on the further front side of the vehicle 1 than the vehicle's rear-side end portion 35 of the cushion 31, or the overlapping portion 11 is present. Hence, the front airbag 30 for the front passenger's seat can be inflated and deployed when a side collision occurs, and the inflated and deployed front airbag 30 for the front passenger's seat can be brought into contact with the side airbag 20. Specifically, the side airbag 20 and the front airbag 30 for the front passenger's seat have a first contact region 26 and a second contact region 36, respectively.

Thus, in the airbag system 10, the cushion 31 of the front airbag 30 for the front passenger's seat used as a support can prevent the vehicle's front side of the cushion 21 of the inflated and deployed side airbag 20 from horizontally rotating toward the front passenger's seat 2b. In addition, using the cushion 31 as a support can prevent the upper side of the inflated and deployed cushion 21 from tilting toward the front passenger's seat 2b. Therefore, the airbag system 10 can secure a portion for accurately receiving the occupant 3, and thus can improve the performance of restraining the occupant 3.

The front passenger's seat 2b may be either occupied by an occupant or unoccupied with no one seated thereon. In either case, the airbag system 10 allows the cushion 21 of the side airbag 20 to be inflated and deployed. The airbag system 10 can reliably protect the occupant 3 seated on the driver's seat 2a from an impact at the time of a side collision, an oblique collision, or the like, regardless of the presence or absence of an occupant on the front passenger's seat 2b.

In addition, when a side collision of the vehicle 1 occurs on the side of the front passenger's seat 2b, the occupant moves to the side where the collision occurs in the initial stage of the collision due to inertial forces, and then moves to the opposite side due to the impact force of the collision. In the airbag system 10, when the cushion 21 of the side airbag 20 is inflated and deployed, the occupant seated on the front passenger's seat 2b can also be restrained from moving toward the center in the vehicle width direction and from moving obliquely forward to the center in the vehicle width direction.

In the airbag system 10, when a collision occurs from the front side of the vehicle 1 with an occupant seated on the front passenger's seat 2b, the cushion 31 of the front airbag 30 for the front passenger's seat is inflated and deployed so as to restrain the head portion, the chest portion, the abdominal portion, and the like of the occupant seated on the front passenger's seat 2b from the front side, as in the conventional airbag system. The front airbag 30 for the front passenger's seat also functions to prevent the occupant seated in the front passenger's seat 2b from colliding with the instrument panel 7 or the front window screen 9 as in the conventional airbag system.

### [First Variation of Embodiment]

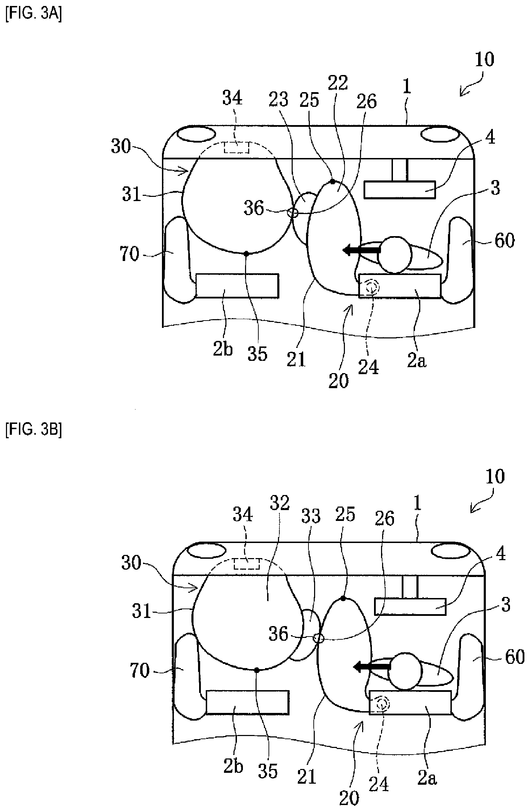

As shown in FIG. 3A, in the airbag system 10 of the present variation, the cushion 21 of the side airbag 20 includes: a first main chamber 22 that is inflated and deployed toward the front side of the vehicle 1; and a first sub-chamber 23 that is inflated and deployed so as to protrude from the first main chamber 22 toward the center in the vehicle's width direction (toward the front airbag 30 for the front passenger's seat). In addition, a first contact region 26 is present on the first sub-chamber 23. The first sub-chamber 23 of the present variation is provided in the overlapping portion 11 illustrated in FIG. 2 (i.e., a portion where the cushion 21 of the side airbag 20 and the cushion 31 of the front airbag 30 for the front passenger's seat overlap each other when perspectively seen from a lateral side with respect to the front-rear direction of the vehicle 1).

The first sub-chamber 23 has a smaller chamber capacity than the first main chamber 22. The first sub-chamber 23 is formed so as to protrude obliquely toward the front side of the front passenger's seat 2b. The first sub-chamber 23 of the present variation is a separate body from the first main chamber 22, and is attached to the first main chamber 22 by sewing. The first sub-chamber 23 communicates with the first main chamber 22 via a vent hole formed in the first main chamber 22.

In the present variation, in the event of a side collision, the inflator 21 receives a signal from the sensor and ejects gas through the hole 21a formed in the outer side surface of the inflator 21 into the first main chamber 22, thereby inflating and deploying the first main chamber 22. After the first main chamber 22 is inflated and deployed, gas flows into the first sub-chamber 23 through the vent hole, causing the first sub-chamber 23 to be inflated and deployed.

The number of vent holes and the size of each hole may be designed by taking into consideration the timing of inflating and deploying the first sub-chamber 23. If the total opening area of the vent holes is made sufficiently large, gas can be quickly supplied to the first sub-chamber 23 almost simultaneously with the inflation and the deployment of the first main chamber 22, allowing the first sub-chamber 23 to be inflated quickly. Depending on design requirements, the total opening area of the vent holes can be adjusted to be slightly smaller, thereby creating a required time lag between the inflation and the deployment of the first main chamber 22 and the inflation and deployment of the first sub-chamber 23.

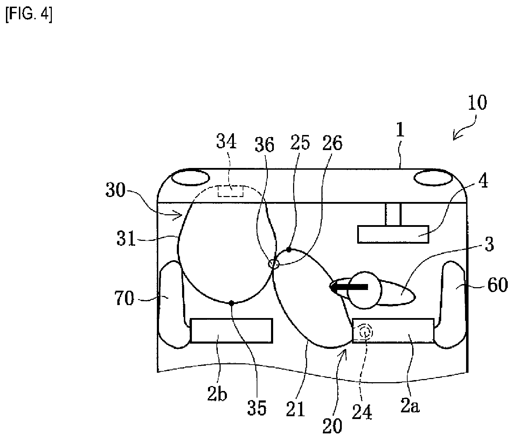

When the configuration of the present variation is compared with another configuration of the embodiment including no first sub-chamber 23 (FIG. 4), the first sub-chamber 23 is inflated so as to protrude toward the front airbag 30 for the front passenger's seat, and thus the space between the side airbag 20 inflated and deployed and the front airbag 30 for the front passenger's seat inflated and deployed is filled with the first sub-chamber 23, and the cushion 31 of the front airbag 30 for the front passenger's seat can easily support the cushion 21 of the side airbag 20. In addition, in the present variation, a side collision moves the occupant 3 toward the center in the vehicle width direction by a reduced amount (cf. comparison between FIGS. 4 and 3A).

In the present variation, since the support is stabilized by the first sub-chamber 23 protruding toward the front side of the front passenger's seat 2b, it is possible to further enhance the effect of preventing the rotation of the leading end portion of the cushion 21 and the effect of preventing the inclination of the cushion 21.

### [Second Variation of Embodiment]

As shown in FIG. 3B, in the airbag system 10 of the present variation, the cushion 31 of the front airbag 30 for the front passenger's seat is configured to include: the second main chamber 32 that is inflated and deployed toward the rear side of the vehicle 1; and a second sub-chamber 33 that is inflated and deployed so as to protrude from the second main chamber 32 toward the center in the vehicle's width direction (toward the side of the side airbag 20). The second sub-chamber 33 of the present variation is provided in the overlapping portion 11 in which the cushion 21 of the side airbag 20 and the cushion 31 of the front airbag 30 for the front passenger's seat overlap each other when perspectively seen from a lateral side with respect to the front-rear direction of the vehicle 1.

Also in the case where the second sub-chamber 33 is provided for the front airbag 30 for the front passenger's seat, the space between the side airbag 20 and the front airbag 30 for the front passenger's seat is filled with the second sub-chamber 33, and the cushion 31 of the front airbag 30 for the front passenger's seat easily supports the cushion 21 of the side airbag 20. Therefore, it is possible to further enhance the effect of preventing the cushion 21 from swinging and tilting when the occupant is restrained.

### [Third Variation of Embodiment]

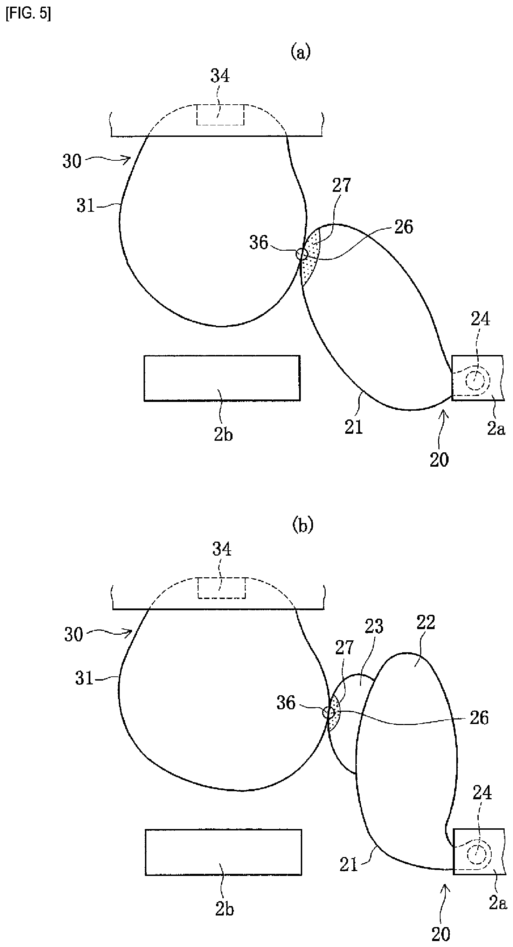

As shown in FIG. 5, in the present variation, the cushion 21 of the side airbag 20 is provided with a first high-friction portion 27 having a larger friction coefficient than the surface portion of the base fabric panel constituting the cushion 21 of the side airbag 20, and the first high-friction portion 27 includes the first contact region 26.

Accordingly, in the present variation, the first high friction portion 27 plays a role of a non-slip device. Hence, once the cushion 21 of the side airbag 20 inflated and deployed and the cushion 31 of the front airbag 30 for a front passenger's seat inflated and deployed are in a contact state, slippage can be prevented from occurring. Therefore, it is easier to maintain the state in which the cushion 21 of the side airbag 20 and the cushion 31 of the front airbag 30 for the front passenger's seat are in contact with each other, which enhances the protection performance for the occupant 3.

In the present variation, a means for increasing the friction coefficient of the first high-friction portion 27 can be implemented by attaching a patch. For example, of the two base fabric panels forming the cushion 21, the base fabric panel on the side in contact with the cushion 31, specifically, the surface thereof, is provided with a patch having a friction coefficient larger than that of the base fabric panel. The patch is sewn and thus attached to the surface mentioned above. This sewing may be performed along the end sides of the patch, for example, in the vicinity of the upper side and the lower side of the patch. Too large a patch may provide an obstacle to the inflation and deployment of the cushion 21 whereas too small a patch may provide an obstacle to an expectation of an appropriate non-slip effect. Therefore, the size of the patch may be appropriately determined within a range that can prevent these problems from occurring.

In the present variation, a means for increasing the friction coefficient of the first high friction portion 27 can also be implemented by applying a resin coating. For example, of the two base fabric panels forming the cushion 21, the base fabric panel on the side in contact with the cushion 31, specifically, the surface thereof, is coated with a resin having a friction coefficient larger than that of the base fabric panel. Also in this case, the size of the area to be coated with the resin may be determined based on the same criteria as described above.

### [Fourth Variation of Embodiment]

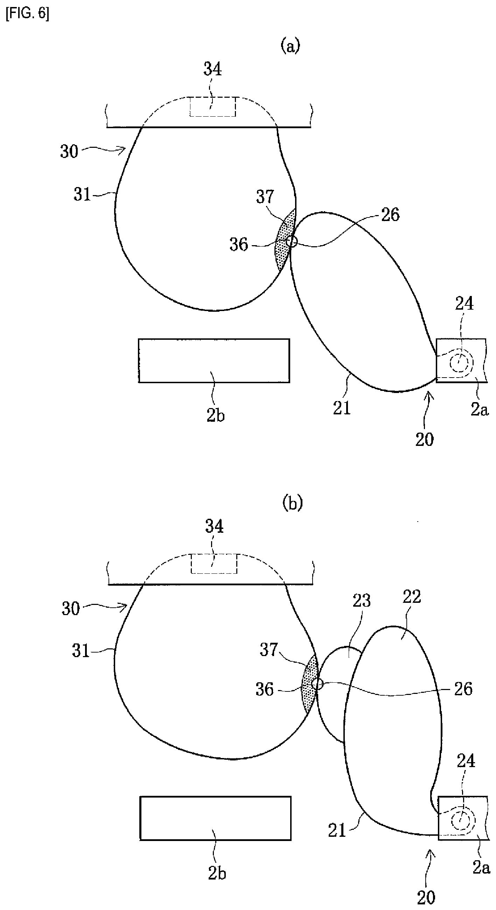

As shown in FIG. 6, in the present variation, the cushion 31 of the front airbag 30 for the front passenger's seat is provided with a second high-friction portion 37 having a larger friction coefficient than the surface portion of the base fabric panel constituting the cushion 31 of the front airbag 30 for a front passenger's seat, and the second high-friction portion 37 includes a second contact region 66.

Also in the present variation, the second high friction portion 37 plays a role of a non-slip device. Hence, once the cushion 21 of the side airbag 20 inflated and deployed and the cushion 31 of the front airbag 30 for a front passenger's seat inflated and deployed are in a contact state, slippage can be prevented from occurring. Therefore, also in the present variation, it is easier to maintain the state in which the cushion 21 of the side airbag 20 and the cushion 31 of the front airbag 30 for the front passenger's seat are in contact with each other, which enhances the protection performance for the occupant 3 as in the second variation.

Also in the present variation, a means for increasing the friction coefficient in the first high friction portion 27 can also be implemented by attaching a patch or applying a resin coating, for example.

### [Other Variations]

In the above-described embodiment, the front airbag may be a front airbag for the driver. To put it differently, the present invention may be configured to provide a side airbag in the side portion on the center side, in the vehicle's width direction, of the front passenger's seat 2b, and also provide a front airbag in front of the driver's seat 2a. In this case, when the cushion of the side airbag is inflated and deployed, the driver's front airbag serving as a support can suppress the vehicle front side of the cushion from rotating toward the driver's seat 2a and can also suppress the upper side of the cushion from tilting toward the driver's seat 2a.

In the above-described embodiment, the front airbag that supports the side airbag 20 provided in the driver's seat 2a may be a driver's front airbag. To put it differently, as shown in FIG. 1B, the airbag system 10 of the present invention may be configured to include: a side airbag 20 that is inflated and deployed toward the front side of the vehicle at a side portion located on the center side, in the vehicle width direction, the driver's seat 2a; and a driver's front airbag 50 that is inflated and deployed in front of the driver's seat 2a. In this case, at the time of a side collision of the vehicle, the control device 40 inflates and deploys the driver's front airbag 50 along with the inflation and deployment of the side airbag 20. The driver's front airbag 50 is disposed in an accommodation portion of a driver's seat panel located within the instrument panel 5 and disposed in front of the driver's seat 2a. The driver's front airbag 50 includes: a cushion 51, which is inflated and deployed towards the driver's seat 2a; and an inflator 54, which ejects inflating gas to inflate the cushion 51.

Also in the airbag system 10 of the present variation, when the side airbag 20 inflated and deployed and the driver's front airbag 50 inflated and deployed are viewed from a lateral direction that is perpendicular to the front-rear direction of the vehicle, the vehicle's front-side end portion 25 of the side airbag 20 is positioned further toward the front side of the vehicle than the vehicle's rear-side end portion 55 of the driver's front airbag 50. In addition, the airbag system 10 of the present variation also has the overlapping portion 11 where the side airbag 20 and the driver's front airbag 50 overlap each other when viewed from a lateral direction that is perpendicular to the front-rear direction of the vehicle. Thus, the driver's front airbag 50 can be inflated and deployed at the time of a side collision, and the driver's front airbag 50 inflated and deployed can be brought into contact with the side airbag 20. Specifically, the side airbag 20 and the driver's front airbag 50 have a first contact region 26 and a third contact region 56, respectively. As in the case of the above-described embodiment, in the present variation, the driver's front airbag 50 serving as a support can suppress the cushion 21 of the side airbag 20 from swinging in the horizontal directions and can also suppress the upper side of the cushion from tilting.

In the above-described embodiment, the first sub-chamber 23 of the cushion 21 described in the first variation may be formed integrally with the first main chamber 22. Also, the second sub-chamber 33 of the cushion 31 described in the second variation may be provided as a separate body from the second main chamber 32 but may be sewn to the second main chamber 32, or the second sub-chamber 33 may be integrally formed with the second main chamber 32.

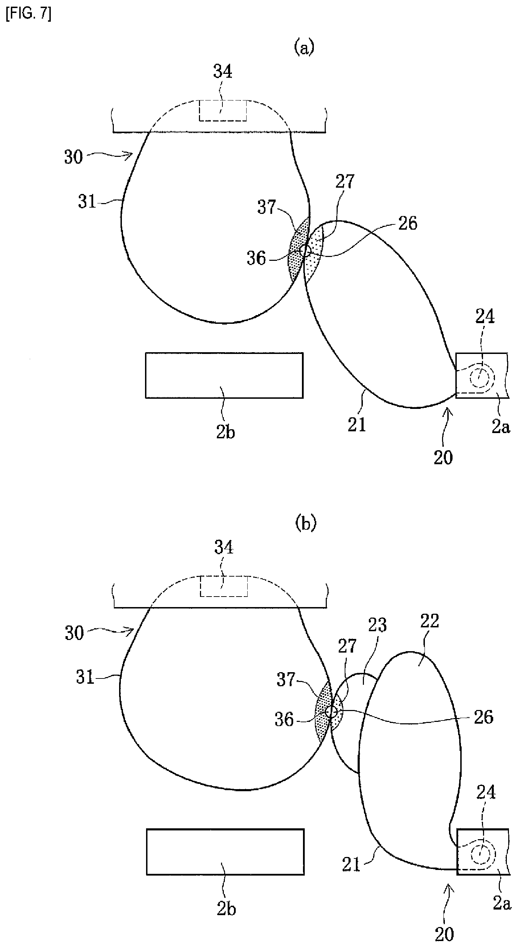

In the embodiment described above, the configuration described in the third variation and the configuration described in the fourth variation may be combined together. To put it differently, as illustrated in FIG. 7, the cushion 21 of the side airbag 20 may be provided with the first high-friction portion 27, and the cushion 31 of the front airbag 30 for the front passenger's seat may be provided with the second high-friction portion 37. In this case, the first high-friction portion 27 includes the first contact region 26, and the second high-friction portion 37 includes the second contact region 66. In the present variation, since the first high-friction portion 27 and the second high-friction portion 37 both having large friction coefficients are in contact with each other, the effect of preventing slippage between the cushion 21 and the cushion 31 is further enhanced.

In the embodiment described above, the cushion 21 of the side airbag 20 and the cushion 31 of the front airbag 30 for the front passenger's seat are not limited to cushions each formed by joining a suitable number of base fabric panels by sewing or the like, but may be formed using a so-called "one-piece weaving" technique.

In the above-described embodiment, the dimensions of the cushion 21 of the side airbag 20 and the cushion 31 of the front airbag 30 for the front passenger's seat in the up-down direction, the front-rear direction, and the left-right direction are not limited to those illustrated in the drawings. The sizes and shapes of the cushion 21 and the cushion 31 may be appropriately adjusted according to the shapes and installation positions of the driver's seat 2a and the front passenger's seat 2b, the range in which protection of the occupant is required, and the like.

### [INDUSTRIAL APPLICABILITY]

The configuration of the present invention is not dependent on a specific vehicle type, and can be applied to any vehicle.

### [EXPLANATION OF CODES]

1. Vehicle
2a. Driver's seat
2b. Front passenger's seat
3. Occupant
10. Airbag system
11. Overlapping portion
20. Side airbag
21. Cushion
22. First main chamber
23. First sub-chamber
24. Inflator
25. Vehicle's front-side end portion of side airbag
26. First contact region
27. First high friction portion
30. Front airbag for front passenger's seat
31. Cushion
32. Second main chamber
33. Second sub-chamber
34. Inflator
35. Vehicle's rear-side end portion of front airbag for front passenger's seat
36. Second contact region
37. Second high friction portion
40. Control device
50. Front airbag for driver's seat
51. Cushion
54. Inflator
55. Vehicle's rear-side end portion of front airbag for driver's seat
56. Third contact region

## Claims

1. An airbag system comprising:
a side airbag inflated and deployed toward a front side of a vehicle at a side portion on a vehicle width direction center side of one seat of the vehicle;
a front airbag inflated and deployed at a vehicle's front side of the other seat provided adjacent to the one seat of the vehicle in a vehicle width direction; and
a control device causing the front airbag to be inflated and deployed together with the side airbag at the time of a side collision of the vehicle,
wherein when the side airbag inflated and deployed and the front airbag inflated and deployed are viewed from a lateral direction perpendicular to a front-rear direction of the vehicle, a vehicle's front-side end portion of the side airbag is positioned further toward the front side of the vehicle than a vehicle's rear-side end portion of the front airbag.

2. An airbag system comprising:
a side airbag inflated and deployed toward a front side of a vehicle at a side portion on a vehicle width direction center side of one seat of the vehicle;
a front airbag inflated and deployed at a vehicle's front side of the one seat of the vehicle; and
a control device causing the front airbag to be inflated and deployed together with the side airbag at the time of a side collision of the vehicle,
wherein when the side airbag inflated and deployed and the front airbag inflated and deployed are viewed from a lateral direction perpendicular to a front-rear direction of the vehicle, a vehicle's front-side end portion of the side airbag is positioned further toward the front side of the vehicle than a vehicle's rear-side end portion of the front airbag.

3. The airbag system according to claim 1 or 2, wherein when the side airbag inflated and deployed and the front airbag inflated and deployed are perspectively viewed from a lateral direction perpendicular to a front-rear direction of the vehicle, the side airbag and the front airbag have an overlapping portion at which the side airbag and the front airbag overlap each other.

4. The airbag system according to claim 1 or 2, wherein in an inflation completed state in which the side airbag and the front airbag are completely inflated and deployed respectively, the side airbag has a first contact region in contact with the front airbag, and the front airbag has a second contact region in contact with the side airbag.

5. The airbag system according to claim 3, wherein the side airbag includes: a first main chamber inflated and deployed toward a vehicle's front side; and a first sub-chamber inflated and deployed so as to protrude from the first main chamber toward a center side in a vehicle's width direction, wherein the first sub-chamber is provided in the overlapping portion.

6. The airbag system according to claim 3, wherein the front airbag includes: a second main chamber inflated and deployed toward a vehicle's rear side; and a second sub-chamber inflated and deployed so as to protrude from the second main chamber toward a center side in a vehicle's width direction, wherein the second sub-chamber is provided in the overlapping portion.

7. The airbag system according to claim 4, wherein the side airbag is provided with a first high-friction portion having a larger friction coefficient than a surface portion of a base fabric panel constituting the side airbag, wherein the first high-friction portion includes the first contact region.

8. The airbag system according to claim 4, wherein the front airbag is provided with a second high-friction portion having a larger friction coefficient than a surface portion of a base fabric panel constituting the front airbag, and wherein the second high-friction portion includes the second contact region.

9. The airbag system according to claim 1 or 2, wherein the front airbag is a front airbag for a front passenger's seat.

10. The airbag system according to claim 1 or 2, wherein the front airbag is a driver's front airbag.
